# FASCICULE DE BREVET EUROPEEN

(11) **EP 2 222 418 B1**
(45) Date de publication et mention de la délivrance du brevet: **16.03.2011**
(21) Numéro de dépôt: 08858081.6
(22) Date de dépôt: 18.11.2008
(51) Int. Cl.: B07C 1/02, B65H 31/40

(54) **DISPOSITIF POUR DECHARGER DES BACS PAR UN ORGANE PIVOTANT**
VORRICHTUNG ZUM ENTLADEN VON BEHÄLTERN MITTELS EINES SCHWINGELEMENTS
DEVICE FOR UNLOADING RECEPTACLES BY MEANS OF A PIVOTING MEMBER

(30) Priorité: 19.11.2007 US 988932 P
(43) Date de publication de la demande: 01.09.2010
(73) Titulaire: Solystic, 94257 Gentilly Cedex (FR)
(72) Inventeur: CARTAL, Bruno, F-26120 Montelier (FR); MADAR, François, F-26500 Bourg Les Valence (FR); GOOD, Matthew, Marriottsville, Maryland 21104 (US)
(74) Mandataire: Prugneau, Philippe
(86) Numéro de dépôt international: PCT/FR2008/052070
(87) Numéro de publication internationale: WO 2009/071789

(56) Documents cités:
- DE-A1- 10 211 785
- US-A- 5 713 713

## Description

L'invention concerne un dispositif pour décharger un bac ouvert sur le haut et rempli d'objets plats, par exemple des envois postaux, disposés en pile dans le fond du bac, comprenant un organe pivotant apte à saisir le bac et à incliner son ouverture vers le bas.

De manière générale, au cours du processus de tri d'envois postaux, les envois postaux sont transportés en pile dans des bacs par des convoyeurs et déchargés par un opérateur au niveau d'un dispositif de déchargement de bac appelé TUD « tray unloading device ». Les bacs sont par exemple amenés depuis des sorties de tri d'une machine de tri ou depuis l'extérieur vers le dispositif de déchargement de bac où les envois sont déchargés, puis transférés vers un magasin d'alimentation où les envois sont dépilés pour être ensuite transportés vers d'autres étapes du processus de tri.

On connaît du document EP-1829804 un dispositif de déchargement pour décharger automatiquement des objets, par exemple des envois postaux, contenus dans un bac amené par un convoyeur. Le dispositif de déchargement comprend un dispositif de serrage et de pivot 50 qui, d'une part, maintient fermement le bac entre un couvercle 21 et un socle 48, et d'autre part, fait pivoter le bac avec le couvercle autour d'un axe horizontal par l'intermédiaire de bras articulés 22, 45, 47, de sorte à faire glisser les envois hors du bac par une ouverture 53 formée dans le couvercle 21 et à les diriger sur une plaque de guidage 23. Cependant, lors du pivotement du bac, l'opérateur maintient sa main sur les envois pour les empêcher de glisser les uns sur les autres et de tomber trop tôt dans le bac, puis l'opérateur doit aider les envois à glisser hors du bac pivoté.

On connaît aussi du document de brevets US-7195236, un système pour décharger des envois contenus dans un bac et les amener sur un convoyeur 20 vers un magasin d'alimentation. Les envois F sont initialement disposés en pile sur chant dans un bac 160 à paroi amovible 160FR qui est transporté par un convoyeur 110 jusqu'à un ascenseur 200 qui les descend au système de déchargement. Ce système de déchargement comprend un dispositif pour soulever la paroi avant 160FR du bac et une palette 30 mobile verticalement et horizontalement destinée à s'insérer dans le bac entre les envois et une paroi arrière 160B du bac, puis à pousser les envois hors du bac, de sorte que les envois sont transportés directement sur un autre convoyeur 20 vers l'unité d'alimentation. La palette est en forme de peigne à dents 30T complémentaires avec des nervures 160T de la paroi arrière 160B du bac pour faciliter l'insertion de la palette entre la paroi arrière du bac et les envois. Plusieurs palettes 30-1,30-2,30-3 disposées en avant de la première palette servent à redresser les envois sur le convoyeur. Cependant, dans ce système, c'est un opérateur qui charge initialement les envois en pile sur chant dans le bac.

L'utilisation de tels systèmes de déchargement soulève certains problèmes. Par exemple, les bacs doivent être transférés manuellement depuis le point de déchargement du système de déchargement, ce qui représente un travail pénible et fatiguant pour l'opérateur dû au poids des bacs et des envois, et la distance à parcourir le long du convoyeur pour décharger chaque bac. En outre, le débit de la machine est ralenti car l'opérateur ne peut pas alimenter le magasin d'alimentation autant qu'il le faudrait pour suivre le rythme du magasin d'alimentation.

On connaît aussi du document US-2007/0201968 un système pour décharger des envois en sortir de tri depuis un bac standard vers une navette en les mettant en pile, puis pour décharger les envois en pile de la navette vers un bac spécial pour un magasin d'alimentation. Le bac standard 9 est chargé manuellement ou automatiquement sur un dispositif de déchargement comprenant un cadre pivotant 22 muni d'une plaque de fermeture et de blocage du bac 9. Le cadre pivotant pivote sur un axe horizontal de sorte à présenter l'ouverture du bac vers le bas, et une navette 8 est amenée par un convoyeur sous le cadre pivotant, de sorte à recevoir les envois 10 une fois la plaque de fermeture retirée. Les navettes ont un fond en forme de V de sorte à taquer et aligner les envois. Ensuite, les navettes sont amenées par un convoyeur vers un dispositif de pivot 52 pour vider les envois de la navette sur un plan 66 grâce à une palette 74 en forme de peigne à dents complémentaires avec des nervures 86 dans une paroi des navettes. Plusieurs palettes 73,74 et 78,79 servent à pousser les envois vers le bac spécial 12 dont une paroi amovible est retirée pour permettre le chargement des envois.

On connaît enfin du document DE 102 11 785 A1 un dispositif pour décharger un bac ouvert sur le haut et rempli d'objets plats disposés en pile dans le fond du bac, comprenant:
- un organe pivotant apte à saisir le bac et à incliner son ouverture vers le bas,
- un poussoir mobile apte à maintenir les objets plats dans le fond du bac lorsque le bac est incliné par l'organe pivotant,
- une navette apte à être déplacée par un convoyeur dans les deux sens d'une direction de convoyage entre l'organe pivotant et une zone de déchargement de la navette distante de l'organe pivotant, la navette ayant un fond et une paroi latérale arrière amovible par rapport au fond,
- un dispositif d'inclinaison de la navette apte à incliner la navette et un dispositif d'ouverture apte à escamoter la paroi arrière de la navette puis à repositionner la paroi arrière.

Le but de l'invention est de proposer un autre dispositif pour décharger automatiquement un bac rempli d'objets plats, par exemple des envois postaux, qui soit automatisé de sorte à assister un opérateur, réduire la charge de travail de l'opérateur et éviter des déchargements manuels pénibles pour l'opérateur. En outre, un autre but de l'invention est de proposer un dispositif pour décharger un bac rempli d'objets plats qui assure un transfert semi-automatique des objets plats depuis un système de transfert de bacs vers un magasin d'alimentation avec à la fois une intervention réduite de l'opérateur et un débit élevé de bacs déchargés.

A cet effet, l'invention a pour objet un dispositif pour décharger un bac ouvert sur le haut et rempli d'objets plats disposés en pile dans le fond du bac, comprenant un organe pivotant apte à saisir le bac et à incliner son ouverture vers le bas, et comprenant en outre
un poussoir mobile apte à maintenir les objets plats dans le fond du bac lorsque le bac est incliné par l'organe pivotant,
un casier navette apte à être déplacé par un convoyeur dans les deux sens d'une direction de convoyage entre l'organe pivotant et une zone de déchargement de casier distante de l'organe pivotant,
le casier navette ayant un fond avec des parois latérales opposées arrière et frontale dans la direction de convoyage qui sont amovibles par rapport au fond,
un dispositif d'inclinaison du casier apte à incliner le casier navette dans une position inclinée à l'aplomb du bac et un dispositif d'ouverture apte à escamoter la paroi arrière du casier navette incliné puis à repositionner la paroi arrière du casier sur le casier,
une palette mobile montée sur un bras articulé apte à être déplacée verticalement par pivotement du bras articulé d'une position basse au niveau du fond du casier à une position haute au-dessus du casier, et apte à être déplacée horizontalement par coulissement le long d'un rail, la palette étant conçue de manière à escamoter la paroi frontale du casier et à s'insérer entre la paroi arrière du casier et la pile d'objets plats.

Avec un tel agencement, on réalise un traitement en parallèle du courrier qui peut atteindre un débit de déchargement de 6 bacs par minute.

Le dispositif de déchargement d'objets plats selon l'invention peut présenter les particularités suivantes :
- le fond et les parois arrière et frontale du casier sont rainurées et dans lequel la palette se présente sous la forme d'un peigne ayant des dents adaptées pour s'insérer dans les rainures du casier ;
- les parois latérales opposées gauche et droite du casier navette sont équipées de plusieurs crans opposés destinés à recevoir la paroi arrière du casier navette pour fermer le casier dans plusieurs positions de fermeture opérationnelles du casier navette;
- le poussoir se présente sous la forme d'un peigne coudé en L ayant des dents adaptées pour s'insérer dans les rainures de la paroi frontale du casier navette ;
- le dispositif comprend en outre un capteur de franchissement pour détecter le passage du casier navette entre l'organe pivotant et la zone de déchargement de casier apte à immobiliser le casier navette en position en réponse à la détection de son passage par ledit capteur de franchissement,
   et un bouton de commande qui, en réponse à son actionnement, commande le convoyeur pour déplacer le casier navette de ladite position vers la zone de déchargement de casier et de la zone de déchargement de casier vers l'organe pivotant ;
- le dispositif comprend en outre un capteur de présence de casier dans la zone de déchargement de casier apte à arrêter le convoyeur si un casier navette est présent dans la zone de déchargement de casier ;
- l'organe pivotant comprend un cadre apte à maintenir fermement le bac, un actionneur du poussoir apte à déplacer le poussoir d'une première position hors du bac vers une deuxième position dans le bac dans laquelle le poussoir retient les objets plats au fond du bac , et un actionneur du cadre apte à faire pivoter autour d'un axe horizontal le cadre avec le poussoir et l'actionneur du poussoir pour incliner l'ouverture du bac vers le bas.
- il est prévu un deuxième convoyeur en parallèle du premier convoyeur et un déviateur de casier pour dévier des casiers du premier convoyeur vers le deuxième convoyeur.

L'invention s'étend à un système de traitement d'envois postaux comprenant une machine de tri postal ayant un magasin d'alimentation et des sorties de tri équipées de bacs amovibles pour y stocker les envois postaux, un système de transfert de bacs qui est agencé pour amener des bacs pleins depuis les sorties de tri de la machine vers le magasin d'alimentation de la machine et pour amener vers les sorties de tri de la machine des bacs vides, lesquels ont été préalablement vidés dans le magasin d'alimentation de la machine ou qui proviennent de l'extérieur de la machine, et comprenant en outre un dispositif de déchargement de bac selon l'invention interposé entre le système de transfert de bacs et le magasin de la machine.

L'invention s'étend aussi à une méthode pour décharger des bacs ouverts sur le haut et remplis d'objets plats disposés en pile dans le fond du bac avec un organe pivotant apte à saisir le bac et à incliner son ouverture vers le bas, comprenant les étapes consistant à :
déplacer automatiquement un casier navette vide par un convoyeur entre l'organe pivotant et une zone de déchargement distante de l'organe pivotant, le casier navette ayant un fond avec des parois latérales arrière et frontale opposées qui sont amovibles par rapport au fond, pour amener automatiquement dans un premier temps le casier navette vide dans une position inclinée à l'aplomb du bac en position également inclinée selon un déplacement de bas en haut pendant lequel la paroi arrière du casier est escamotée pour permettre réaliser un transfert des objets plats par glissement à travers l'ouverture du bac dans le casier,
déplacer automatiquement le casier navette plein pour amener automatiquement dans un second temps le casier navette vers la zone de déchargement selon un déplacement de haut en bas pendant lequel la paroi arrière du casier est replacée dans une position opérationnelle de fermeture du casier,
déplacer automatiquement le casier navette plein selon un déplacement essentiellement de translation horizontale jusqu'à une zone d'attente où le passage du casier est détecté par un capteur de franchissement, le convoyeur étant arrêté pour immobiliser le casier navette en position dans la zone d'attente en réponse à la détection du passage du casier par ledit capteur de franchissement et le convoyeur étant remis en marche en réponse à l'actionnement d'un bouton de commande du convoyeur pour déplacer le casier navette jusqu'à la zone de déchargement ,
déplacer une palette mobile montée sur un bras articulé de haut en bas par pivotement du bras pour escamoter la paroi frontale du casier,
déplacer la palette horizontalement par coulissement le long d'un rail pour placer la palette sensiblement au-dessus de la paroi arrière du casier,
déplacer la palette de haut en bas par pivotement du bras articulé pour s'insérer entre la paroi arrière du casier et la pile d'objets plats,
déplacer la palette horizontalement par coulissement le long du rail pour pousser cette pile d'objets plat hors du casier,
déplacer la palette de haut en bas pour replacer la paroi frontale du casier dans une position opérationnelle de fermeture du casier navette vide,
déplacer automatiquement le casier navette vide selon un déplacement essentiellement de translation horizontale dans le sens opposé en réponse à l'actionnement du bouton de commande du convoyeur pour déplacer le casier navette vers l'organe pivotant.

La méthode selon l'invention peut présenter les particularités suivantes :
- la méthode comprend les étapes consistants, préalablement au transfert des objets plats par glissement à travers l'ouverture du bac dans le casier navette, à
   amener le bac dans un cadre apte à maintenir fermement le bac,
   déplacer un poussoir mobile d'une première position hors du bac vers une deuxième position dans le bac dans laquelle le poussoir retient les objets plats au fond du bac,
   faire pivoter autour d'un axe horizontal le cadre avec le poussoir et l'actionneur du poussoir pour incliner l'ouverture du bac vers le bas,
   déplacer le poussoir mobile de ladite deuxième position dans le bac vers ladite première position hors du bac pour transférer les objets plats dans le casier navette ;
- après déchargement du casier navette dans la zone de déchargement de casier, le casier navette vide est déplacé jusqu'à une zone de déviation où le casier navette vide est dévié vers un deuxième convoyeur parallèle au premier convoyeur.

L'invention sera maintenant décrite plus en détail et en référence aux dessins annexés qui en illustrent des exemples non limitatifs, dans lesquels :
la figure 1 montre schématiquement en perspective un système de traitement d'envois postaux selon l'invention ;
la figure 2 montre une vue schématique en plan du système de traitement d'envois postaux selon l'invention ;
la figure 3 schématiquement en perspective une partie du dispositif de déchargement de bac selon l'invention dans une position initiale du bac :
la figure 4 montre schématiquement en perspective le dispositif de déchargement de bac de la figure 2 dans une deuxième position du dispositif de déchargement de bac ;
la figure 5 montre schématiquement en perspective le dispositif de déchargement de bac de la figure 2 dans une troisième position du dispositif de déchargement de bac ;
la figure 6 montre schématiquement en perspective le dispositif de déchargement de bac de la figure 2 dans une quatrième position du dispositif de déchargement de bac ;
la figure 7 montre schématiquement en perspective le dispositif de déchargement de bac de la figure 2 dans une cinquième position de l'organe pivotant ;
la figure 8 montre schématiquement en perspective le dispositif de déchargement de bac de la figure 2 dans une sixième position de l'organe pivotant ;
la figure 9 schématiquement en perspective un casier navette pour le dispositif de déchargement de bac selon l'invention dans une position ouverte avant du casier navette ;
la figure 10 est un organigramme illustrant les étapes de déchargement de bacs selon l'invention.

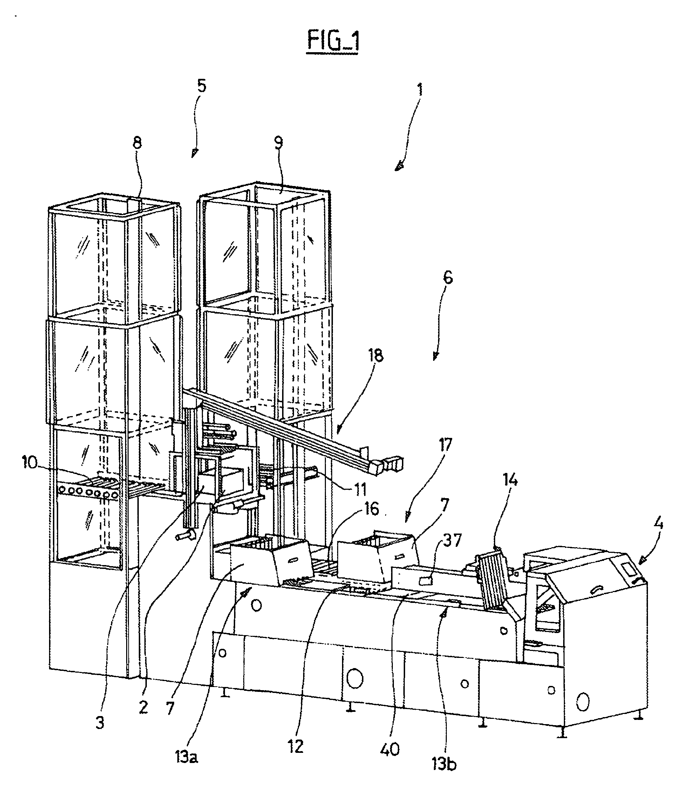

Sur la figure 1, on a représenté un système de traitement 1 d'objets plats selon l'invention, par exemple des envois postaux 3, stockés en pile horizontale dans des bacs 2, comprenant un magasin d'alimentation 4 d'une machine de tri et un système de transfert de bacs 5. Le système de transfert de bacs 5 est agencé pour réaliser un recyclage de bacs pleins entre les sorties et l'entrée de la machine. En particulier, il est agencé pour amener automatiquement des bacs 2 pleins par exemple depuis des sorties de tri de la machine de tri (non représentées) vers le magasin d'alimentation 4 où ils sont déchargés et pour amener automatiquement des bacs 2 vides qui ont été déchargés dans le magasin d'alimentation 4 de la machine vers les sorties de tri. On comprendra que ce système de transfert de bacs comporte aussi une entrée pour être chargé en bacs pleins provenant de l'extérieur de la machine lesquels sont amenés vers le magasin d'alimentation et également une autre entrée pour être chargé en bacs vides provenant également de l'extérieur de la machine lesquels sont amenés vers les sorties de tri de la machine.

Le système de traitement d'envois 1 comprend un dispositif de déchargement de bac 6 semi-automatique interposé entre le système de transfert de bacs 5 et le magasin d'alimentation 4 pour d'une part décharger automatiquement les bacs 2 dans des casiers navettes 7 disposés à l'aplomb des bacs 2, et d'autre part, aider l'opérateur à décharger les envois 3 des casiers 7 dans le magasin d'alimentation 4 et à justifier ou aligner la pile d'envois 3 entrant dans le magasin d'alimentation 4. Ainsi, le déchargement des bacs 2 dans les casiers 7 n'est pas effectué par l'opérateur, ce qui est plus rapide et moins pénible pour celui-ci. On comprendra que l'on compte généralement un seul dispositif de déchargement de bac 6 par magasin d'alimentation 4. Les casiers navettes 7 pleins peuvent aussi être emmenés vers l'extérieur par exemple lorsque le processus de tri est achevé, plutôt que d'être amenés vers le magasin d'alimentation 4.

Le système de transfert de bacs 5 selon l'invention comprend un élévateur 8 d'arrivée pour descendre des bacs 2 pleins amenés par un système de gestion de bac (non montré) de la machine de tri au niveau du dispositif de déchargement de bac 6 au moyen d'un convoyeur 10 déplaçable verticalement par l'intermédiaire d'un actionneur linéaire respectif (non montré), et un élévateur 9 de sortie pour remonter les bacs 2 vides au niveau du système de gestion de bac au moyen d'un convoyeur 11 déplaçable verticalement par l'intermédiaire d'un autre actionneur linéaire respectif (non montré). Le dispositif de déchargement de bac 6 comprend un organe pivotant 18 pour faire pivoter un bac 2 courant et le vider dans un casier navette 7 ainsi qu'un convoyeur de casier 12 qui amène le casier navette 7 plein dans un mouvement essentiellement de translation horizontale jusqu'au magasin d'atteindre un débit élevé de traitement des envois dans la machine de tri.

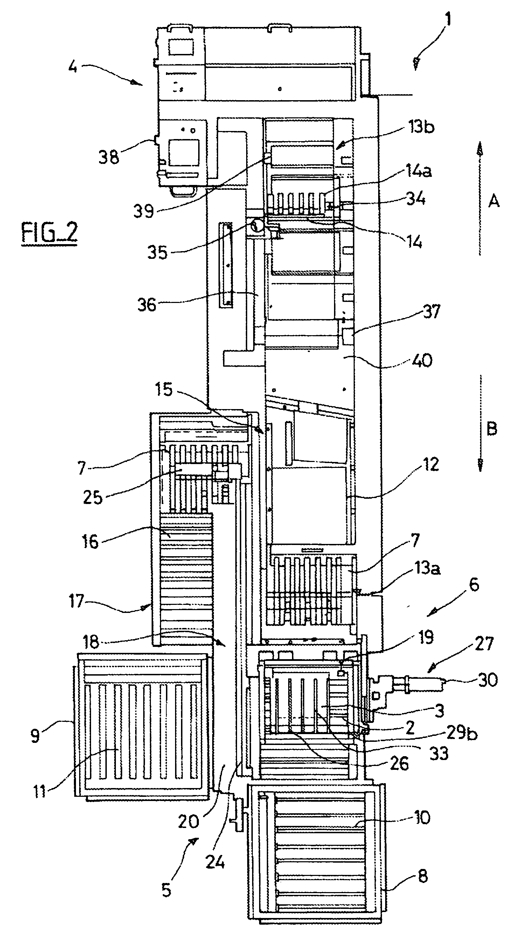

Comme on peut le voir plus précisément sur la figure 2, le convoyeur de casier 12 amène au moins un casier navette 7 plein depuis une zone de chargement de casier 13a à l'aplomb du bac 2, vers le magasin d'alimentation 4 dans un sens d'une direction de convoyage indiqué par la flèche A jusqu'à une zone de déchargement de casier 13b où le casier 7 est déchargé par l'opérateur au moyen d'une palette mobile 14, les envois 3 étant alors chargés dans le magasin d'alimentation 4. Le convoyeur de casier est conçu pour fonctionner aussi dans un sens opposé de la direction de convoyage en direction du dispositif de déchargement de bac 6, indiqué par la flèche B sur la figure 2, pour évacuer les casiers vides de la zone de déchargement de casier 13b en direction du dispositif de déchargement de bac 6. Un déviateur de casier 15 peut être ajouté sur le long du convoyeur 12 pour diriger un casier navette 7 vide vers un deuxième convoyeur de casier 16 servant de zone tampon ou d'accumulation 17 de casiers dans laquelle un ou plusieurs casiers 7 restent en attente jusqu'à ce qu'aucun casier ne soit plus présent dans le dispositif de déchargement de bac 6 à l'aplomb d'un bac 2.

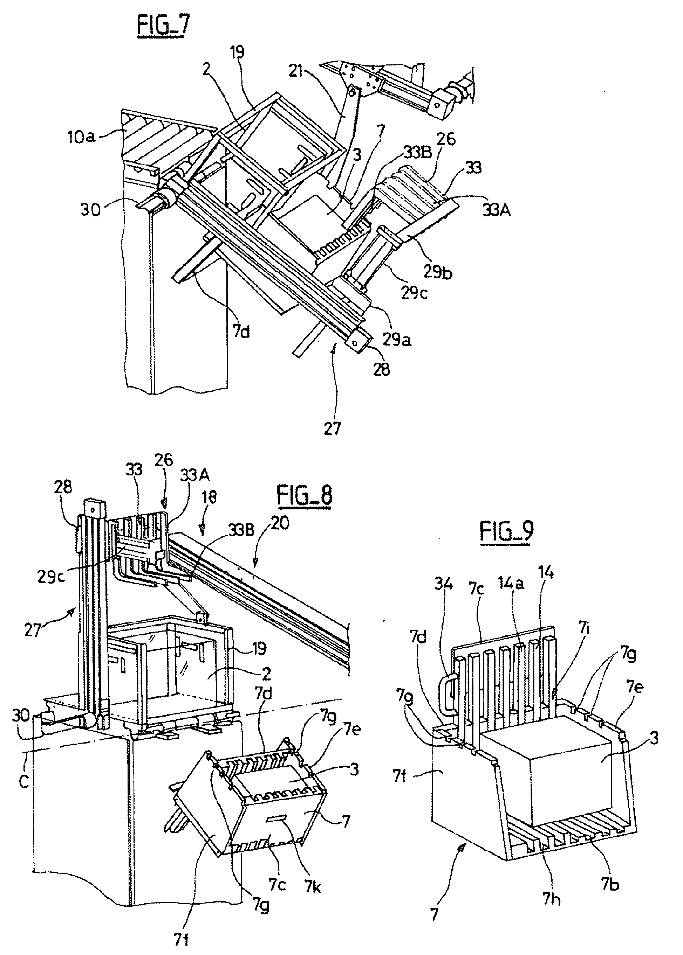

Les bacs 2 utilisés ici sont des bacs standards ouverts sur le haut 2a pour pouvoir charger ou décharger les envois 3, et présentent un fond 2b et quatre parois latérales fixes, comme on peut mieux le voir sur la figure 8. Les casiers navettes 7, mieux visibles sur la figure 9, ont une ouverture 7a sur le haut, un fond 7b qui présente des rainures 7h, des parois latérales frontale et arrière 7c,7d qui sont amovibles par rapport au fond 7b pour pouvoir charger ou décharger les envois 3 et qui présentent chacune des rainures 7i,7j, et des parois latérales droite et gauche 7e,7f qui présentent respectivement des crans 7g opposés, ici quatre crans sur chaque paroi latérale, destinés à recevoir la paroi arrière 7d du casier navette 7 pour pouvoir mettre en place cette paroi arrière dans plusieurs positions de fermeture opérationnelles différentes du casier ce qui permet à ce casier navette de pouvoir être adapté à différentes épaisseurs de pile d'envois pour transporter des quantités différentes d'envois 3, comme cela sera décrit plus loin.

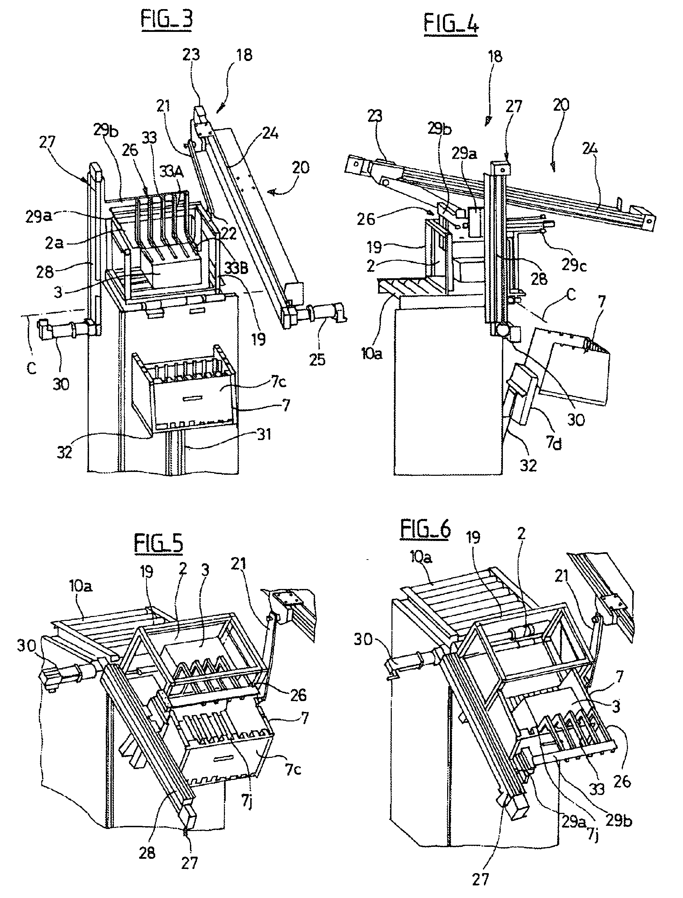

La figure 3 représente une vue agrandie du dispositif de déchargement de bac 6, lequel comprend un organe pivotant 18 pour faire pivoter ou basculer le bac 2 autour d'un axe horizontal C de sorte à incliner son ouverture 2a vers le bas 2. L'organe pivotant 18 comprend un cadre 19, dans lequel est maintenu fermement le bac 2, conçu pour empêcher le glissement du bac pendant que celui-ci pivote, et un actionneur du cadre ou bras articulé 20 lié au cadre pour faire pivoter le cadre 19 contenant le bac 2. Le bras articulé 20 comprend ici une section de bras 21 liée par pivot à une première extrémité 22 au cadre 19 et à une deuxième extrémité 23 à une glissière 24 du bras articulé 20 qui est montée en rotation sur un arbre 25 sensiblement parallèle à l'axe C.

Comme visible sur la figure 3, l'organe pivotant 18 comprend en outre un poussoir 26 mobile au moyen d'un actionneur du poussoir 27 pour maintenir les envois 3 dans le fond du bac 2 lorsque le bac 2 est incliné afin d'empêcher que les envois 3 ne bougent ou ne glissent les uns par rapport aux autres pendant le transfert des envois 3 du bac 2 vers le casier navette 7, c'est-à-dire de conserver une pile d'envois bien formée. L'actionneur du poussoir 27 comprend une glissière 28 le long de laquelle se déplace un coulisseau 29a portant une barre 29b s'étendant sensiblement dans la direction de l'axe C, sur laquelle est fixé le poussoir 25, la glissière 28 étant montée en rotation sur un arbre 30 parallèle à l'axe C. Ainsi, le poussoir 26 se déplace le long de la glissière 28 d'une première position hors du bac 2 (représentée sur la figure 7) vers une deuxième position dans le bac 2 dans laquelle le poussoir 26 retient les envois 3 au fond du bac 2 (représenté figure 3).

Le déchargement d'envois 3 d'un bac 2 vers un casier 7 sera maintenant décrit en références aux figures 3 à 9.

Un bac 2 plein est d'abord amené par le convoyeur 10 de l'élévateur 8 jusqu'à un autre convoyeur 10A du dispositif de déchargement de bac 6 (mieux visible sur la figure 2) dans une position initiale dans le cadre 19 dans lequel il est bloqué, et le poussoir 26, initialement en position haute au-dessus du bac 2, est descendu en position basse le long de la glissière 28 de sorte à maintenir les envois 3 en pile horizontale au fond du bac 2, comme on peut le voir sur la figure 3. Dans un même temps, un casier navette 7 vide est amené par le convoyeur 12 à l'aplomb du bac 2 dans le dispositif de déchargement de bac 6, où le casier 7 est incliné sa paroi arrière 7d vers le haut par un dispositif d'inclinaison du casier 31 et la paroi latérale arrière 7d du casier est escamotée ou retirée par un dispositif 32 d'ouverture comme visible sur la figure 4.

Le bac 2 est alors incliné, c'est-à-dire pivoté autour de l'axe C, par un mouvement du bras articulé 20 de l'organe pivotant 18 dans lequel la section de bras 21 se déplace dans la glissière 24 comme on peut le voir figure 5, les envois 3 étant retenus dans le bac 2 par le poussoir 26 qui pivote simultanément avec la glissière 28 autour de l'arbre 30.

Ensuite, le poussoir 26 est déplacé le long de la glissière 28 de sorte à amener les envois 3 dans le casier 7, comme on peut le voir sur la figure 6. Le poussoir 26 est avantageusement réalisé sous la forme d'un peigne coudé en L, ayant une pluralité de dents 33 en forme de L avec une première partie 33A fixée à la barre 29b et une deuxième partie 33B s'étendant sensiblement perpendiculairement à la première partie 33A et adaptées pour s'insérer dans les rainures 7j de la paroi frontale 7c du casier 7, de sorte que les envois 3 sont déchargés contre la paroi frontale 7c sans que la pile d'envoi 3 ne soit désordonnée. Le poussoir 26 est ensuite retiré du casier 7 toujours sans désordonner la pile d'envois 3, comme visible figure 7, par le déploiement d'un dispositif télescopique 29c monté entre le coulisseau 29a et la barre 29b qui éloigne le poussoir 26 de la glissière 28. On comprendra que les envois 3 étant disposés en pile horizontalement dans le bac 2 sont transférés sur la deuxième partie 33B des dents 33 et se retrouvent en pile sur chant dans le casier 7. La paroi latérale arrière 7d du casier 7 est alors remise en place par le dispositif 32 d'ouverture du casier, dans deux crans opposés 7g des parois latérales gauche et droite en fonction de la taille de la pile d'envois 3 déchargés dans le casier.

Le bac 2 est alors redressé à l'horizontal sur le convoyeur 10 dans sa position initiale montrée figure 8 dans laquelle le fond du bac 2 est sensiblement horizontal, par un pivotement autour de l'axe C provoqué par un mouvement du bras articulé 20 de l'organe pivotant 18 dans lequel la section de bras 21 revient dans la glissière 24. Dans le même temps, le poussoir 26 revient aussi dans sa position initiale par pivotement de la glissière 28 autour de l'arbre 30 et par le repliement du dispositif télescopique 29c. Enfin, le casier 7 est redressé à l'horizontal par le dispositif d'inclinaison du casier 31 de sorte que sa paroi de fond 7b est sensiblement horizontale, prêt à être emmené par le convoyeur 12 vers le magasin d'alimentation 4.

Au niveau de la zone de déchargement de casier 13b, la palette mobile 14 peut être montée sur un bras articulé 35 qui permet à l'opérateur de déplacer la palette 14 verticalement, le bras étant monté sur un rail 36 de sorte à permettre un coulissement horizontal de la palette 14. La palette 14 peut être fixée à la paroi frontale 7c du casier navette 7 par l'intermédiaire d'une poignée 7k de sorte que la paroi frontale 7c du casier 7 est escamotée ou retirée lorsque l'opérateur soulève la palette mobile 14 par une poignée 34 de la palette 14, en faisant pivoter le bras articulé 35 d'une position basse au niveau du fond 7b du casier 7 à une position haute au-dessus du casier 7. La palette se présente de préférence sous la forme d'un peigne ayant des dents 14a adaptées pour s'insérer dans les rainures 7i de la paroi arrière 7d du casier 7 de sorte que l'opérateur peut glisser la palette 14 entre les envois 3 et la paroi arrière 7d comme on peut le voir figure 8, en intercalant ou engrenant les dents 14a dans les rainures 7i sans toucher les envois 3. Les dents 14a de la palette 14 peuvent être réalisées de manière à s'intercaler aussi dans les rainures 7h de la paroi de fond 7b du casier 7. De cette façon, la pile d'envois 3 sur chant n'est pas déséquilibrée, ni désorganisée par l'insertion de la palette 14. La palette 14 peut être déplacée horizontalement en position basse contre le fond 7h du casier 7 pour pousser les envois 3 hors du casier 7 et les charger dans le magasin d'alimentation 4. En variante, le bras articulé 35 peut être omis et c'est l'opérateur lui-même qui soulève la palette 14, puis la fait glisser dans le rail 36, et enfin la descend dans le casier 7 pour décharger les envois 3.

Pour des raisons de sécurité, le dispositif de déchargement de bac 6 automatique peut être conçu pour empêcher l'accès du dispositif à l'opérateur pendant le fonctionnement du dispositif, par exemple en étant couvert. Un dispositif de sécurité 37 peut aussi être inséré le long du convoyeur 12 pour protéger l'opérateur au cours du déchargement semi-automatique des casiers 7. Par exemple, le dispositif de sécurité 37 peut comprendre un capteur de franchissement pour détecter le passage d'un casier navette 7 dans le sens A entre l'organe pivotant 18 et la zone de déchargement de casier 13b, qui permet d'arrêter le convoyeur 12 pour immobiliser le casier navette 7 plein au niveau d'une zone d'attente 40, jusqu'à la réception d'un signal donné par l'opérateur par l'intermédiaire d'un bouton de commande 38 qui, en réponse à son actionnement, commande le convoyeur 12 pour déplacer le casier navette 7 plein de sa position d'attente jusqu'à la zone de déchargement de casier 13b où le casier navette 7 est déchargé par l'opérateur. De la même manière, le bouton de commande 38 actionné par l'opérateur déclenche le convoyeur 12 dans le sens opposé B pour déplacer le casier navette 7 vide de la zone de déchargement de casier 13b vers l'organe pivotant 18.

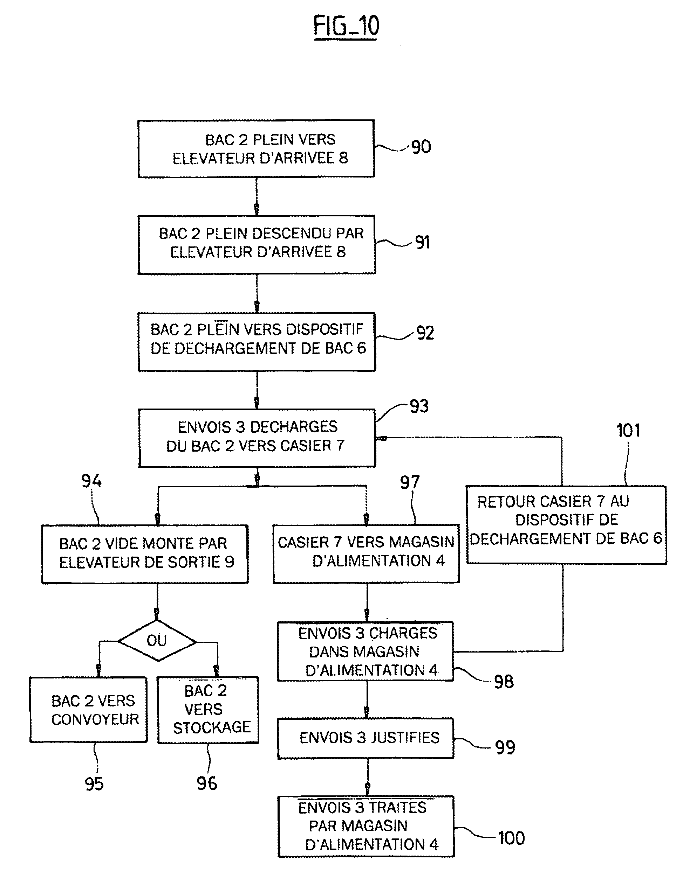

La figure 10 illustre les étapes de fonctionnement du système de traitement d'envois postaux 1.

Les bacs 2 pleins contenant les envois postaux 3 disposés horizontalement en pile dans le fond du bac 2 sont amenés par un convoyeur (non représenté) depuis les sorties de tri de la machine de tri jusqu'au système de transfert de bacs 5. Quand l'organe pivotant 18 est vide, à l'étape 90, un nouveau bac 2 plein est amené par le convoyeur 10 dans l'élévateur d'arrivée 8, puis, à l'étape 91, le bac 2 plein est descendu par l'élévateur d'arrivée 8 jusqu'au niveau de l'organe pivotant 18 du dispositif de déchargement de bac 6. A l'étape 92, le bac est transféré sur le convoyeur 10A dans le cadre 19 où il est bloqué, et le poussoir 26 est amené sur les envois 3 pour les bloquer au fond du bac 2. A l'étape 93, le bac 2 est incliné autour de l'axe C par l'organe pivotant 18 comme décrit ci-dessus, le poussoir 26 suivant le même mouvement pour maintenir les envois 3 dans le bac 2, puis le poussoir 26 est décalé pour transférer les envois du bac 2 vers le casier navette 7.

A l'étape 94, le bac 2 vide est emmené par le convoyeur 11 de l'élévateur 9 de sortie, puis remonté au niveau du système de gestion de bac de la machine de tri pour être soit transporté par le système de gestion de bac à l'étape 95, soit stocké dans la machine de tri à l'étape 96.

A l'étape 97, le casier navette 7 plein est transféré par le convoyeur 12 dans le sens A vers le magasin d'alimentation 4, pour être traité semi-automatiquement par l'opérateur. Si un premier casier 7 est déjà présent dans la zone de déchargement de casier 13b, un signal fourni par un capteur de présence 39 de casier 7 disposé dans la zone de déchargement de casier 13b commande l'arrêt du convoyeur 12 jusqu'à ce que le premier casier ait quitté la zone de déchargement de casier 13b et soit dirigé par le déviateur 15 vers la zone tampon 17. Le casier navette 7 peut alors continuer à avancer dans le sens A sur le convoyeur 12 jusqu'à la zone d'attente 40 où il est arrêté automatiquement par le capteur de franchissement 37. A l'étape 98, lorsque l'opérateur est prêt, il actionne le bouton de commande 38 pour faire avancer le casier navette 7 dans le sens A jusqu'à la zone de déchargement de casier 13b et il vide le casier 7 à l'aide de la palette 14 comme décrit ci-dessus. Puis, à l'étape 99, l'opérateur justifie les envois 3, c'est-à-dire améliore encore leur alignement dans la pile pour faciliter leur traitement ou dépilage par le magasin d'alimentation 4 à l'étape 100. A l'étape 101, l'opérateur actionne le bouton de commande 38 pour faire repartir le casier navette 7 dans le sens B vers l'organe pivotant 8 afin d'y être chargé en envois 3.

Avantageusement, plusieurs casiers navettes 7 peuvent être utilisés simultanément dans les différentes zones du dispositif de déchargement de bac 6 afin de garantir un débit élevé de la machine de tri. Dans ce cas, un premier casier navette 7 est par exemple chargé dans la zone de chargement de casier 13a, pendant qu'un deuxième casier navette 7 est déchargé dans la zone de déchargement de casier 13b. Lorsque ce deuxième casier navette 7 revient une fois déchargé dans le sens B en direction l'organe pivotant 18, il est dévié par le déviateur 16 dans la zone tampon 17 pour laisser passer le premier casier navette 7 sur le convoyeur 12 vers la zone de déchargement de casier 13b pendant qu'un troisième casier navette 7 peut être chargé dans la zone de chargement de casier 13a.

## Revendications

1. Dispositif pour décharger un bac (2) ouvert sur le haut et rempli d'objets plats (3) disposés en pile dans le fond du bac, comprenant:
un organe pivotant (18) apte à saisir le bac (2) et à incliner son ouverture (2a) vers le bas,
un poussoir (26) mobile apte à maintenir les objets plats (3) dans le fond du bac (2) lorsque le bac (2) est incliné par l'organe pivotant (18),
un casier navette (7) apte à être déplacé par un convoyeur (12) dans les deux sens (A,B) d'une direction de convoyage entre l'organe pivotant (18) et une zone de déchargement de casier (13b) distante de l'organe pivotant (18),
le casier navette (7) ayant un fond (7b) avec des parois latérales opposées arrière (7d) et frontale (7c) dans la direction de convoyage qui sont amovibles par rapport au fond (7b),
un dispositif d'inclinaison du casier (31) apte à incliner le casier navette (7) dans une position inclinée à l'aplomb du bac (2) et un dispositif d'ouverture (32) apte à escamoter la paroi arrière (7d) du casier navette (7) incliné puis à repositionner la paroi arrière (7d) du casier (7) sur le casier (7),
une palette (14) mobile montée sur un bras articulé (35) apte à être déplacée verticalement par pivotement du bras articulé (35) d'une position basse au niveau du fond (7b) du casier (7) à une position haute au-dessus du casier (7), et apte à être déplacée horizontalement par coulissement le long d'un rail (36), la palette (14) étant conçue de manière à escamoter la paroi frontale (7c) du casier (7) et à s'insérer entre la paroi arrière (7d) du casier (7) et la pile d'objets plats (3).

2. Dispositif selon la revendication 1, dans lequel le fond (7b) et les parois arrière (7d) et frontale (7c) du casier (7) sont rainurées et dans lequel la palette (14) se présente sous la forme d'un peigne ayant des dents (14a) adaptées pour s'insérer dans les rainures (7h,7i,7j) du casier (7).

3. Dispositif selon l'une des revendications 1 ou 2, dans lequel les parois latérales opposées gauche (7f) et droite (7e) du casier navette (7) sont équipées de plusieurs crans (7g) opposés destinés à recevoir la paroi arrière (7d) du casier navette (7) pour fermer le casier (7) dans plusieurs positions de fermeture opérationnelles différentes du casier navette (7) de manière à l'adapter à des épaisseurs de pile d'envois différentes.

4. Dispositif selon l'une des revendications 2 ou 3, dans lequel le poussoir (26) se présente sous la forme d'un peigne coudé en L ayant des dents (33) adaptées pour s'insérer dans les rainures (7j) de la paroi frontale (7c) du casier navette (7).

5. Dispositif selon l'une des revendications 1 à 4, **caractérisé en ce qu'**il comprend en outre un capteur de franchissement (37) pour détecter le passage du casier navette (7) entre l'organe pivotant (18) et la zone de déchargement de casier (13b) apte à immobiliser le casier navette (7) en position en réponse à la détection de son passage par ledit capteur de franchissement (37),
et un bouton de commande (38) qui, en réponse à son actionnement, commande le convoyeur (12) pour déplacer le casier navette (7) de ladite position vers la zone de déchargement de casier (13b) et de la zone de déchargement de casier (13b) vers l'organe pivotant (18).

6. Dispositif selon l'une des revendications 1 à 5, **caractérisé en ce qu'**il comprend en outre un capteur de présence (39) de casier (7) dans la zone de déchargement de casier (13b) apte à arrêter le convoyeur (12) si un casier navette (7) est présent dans la zone de déchargement de casier (13b).

7. Dispositif selon l'une des revendications 1 à 6, **caractérisé en ce que** l'organe pivotant (18) comprend un cadre (19) apte à maintenir fermement le bac (2), un actionneur du poussoir (27) apte à déplacer le poussoir (26) d'une première position hors du bac vers une deuxième position dans le bac dans laquelle le poussoir (26) retient les objets plats (3) au fond du bac (2), et un actionneur du cadre (20) apte à faire pivoter autour d'un axe horizontal (C) le cadre (19) avec le poussoir (26) et l'actionneur du poussoir (27) pour incliner l'ouverture (2a) du bac (2) vers le bas.

8. Dispositif selon l'une des revendications 1 à 7, dans lequel il est prévu un deuxième convoyeur (16) en parallèle du premier convoyeur (12) et un déviateur de casier (15) pour dévier des casiers (7) du premier convoyeur (12) vers le deuxième convoyeur (16).

9. Système de traitement d'envois postaux (1) comprenant une machine de tri postal ayant un magasin d'alimentation (4) et des sorties de tri équipées de bacs (2) amovibles pour y stocker les envois postaux (3), un système de transfert de bacs (5) qui est agencé pour amener des bacs (2) pleins depuis les sorties de tri de la machine vers le magasin d'alimentation (4) de la machine et pour amener des bacs (2) vides vers les sorties de tri de la machine, et comprenant en outre un dispositif de déchargement de bac (6) selon l'une des revendications 1 à 8 interposé entre le système de transfert de bacs (5) et le magasin de la machine (4).

10. Méthode pour décharger des bacs (2) ouverts sur le haut et remplis d'objets plats (3) disposés en pile dans le fond du bac (2) avec un organe pivotant (18) apte à saisir le bac (2) et à incliner son ouverture vers le bas, comprenant les étapes consistant à:
déplacer automatiquement un casier navette (7) vide par un convoyeur (12) entre l'organe pivotant (18) et une zone de déchargement (13b) distante de l'organe pivotant (18), le casier navette (7) ayant un fond (7b) avec des parois latérales arrière (7d) et frontale (7c) opposées qui sont amovibles par rapport au fond, (7b) pour amener automatiquement dans un premier temps le casier navette (7) vide dans une position inclinée à l'aplomb du bac (2) en position également inclinée selon un déplacement de bas en haut pendant lequel la paroi arrière (7d) du casier (7) est escamotée pour permettre réaliser un transfert des objets plats (3) par glissement à travers l'ouverture (2a) du bac (2) dans le casier (7),
déplacer automatiquement le casier navette (7) plein pour amener automatiquement dans un second temps le casier navette (7) vers la zone de déchargement (13b) selon un déplacement de haut en bas pendant lequel la paroi arrière (7c) du casier (7) est replacée dans une position opérationnelle de fermeture du casier (7),
déplacer (97) automatiquement le casier navette (7) plein selon un déplacement essentiellement de translation horizontale (A) jusqu'à une zone d'attente (40) où le passage du casier (7) est détecté par un capteur de franchissement (37), le convoyeur (12) étant arrêté pour immobiliser le casier navette (7) en position dans la zone d'attente (40) en réponse à la détection du passage du casier (7) par ledit capteur de franchissement (37) et le convoyeur (12) étant remis en marche en réponse à l'actionnement d'un bouton de commande (38) du convoyeur pour déplacer le casier navette (7) jusqu'à la zone de déchargement (13b),
déplacer une palette (14) mobile montée sur un bras articulé (35) de haut en bas par pivotement du bras (35) pour escamoter la paroi frontale (7c) du casier (7),
déplacer la palette (14) horizontalement par coulissement le long d'un rail (36) pour placer la palette (14) sensiblement au-dessus de la paroi arrière (7d) du casier (7),
déplacer la palette (14) de haut en bas par pivotement du bras articulé (35) pour s'insérer entre la paroi arrière (7d) du casier (7) et la pile d'objets plats (3),
déplacer la palette (14) horizontalement par coulissement le long du rail (36) pour pousser (98) cette pile d'objets (3) plat hors du casier (7),
déplacer la palette (14) de haut en bas pour replacer la paroi frontale (7c) du casier dans une position opérationnelle de fermeture du casier navette (7) vide,
déplacer (101) automatiquement le casier navette (7) vide selon un déplacement essentiellement de translation horizontale dans le sens opposé (B) en réponse à l'actionnement du bouton de commande (38) du convoyeur pour déplacer le casier navette (7) vers l'organe pivotant (18).

11. Méthode pour décharger des bacs selon la revendication 10, comprenant les étapes consistants, préalablement au transfert des objets plats (3) par glissement à travers l'ouverture (2a) du bac (2) dans le casier navette (7), à
amener (92) le bac (2) dans un cadre (19) apte à maintenir fermement le bac (2),
déplacer un poussoir (26) mobile d'une première position hors du bac (2) vers une deuxième position dans le bac (2) dans laquelle le poussoir (26) retient les objets plats (3) au fond du bac (2),
faire pivoter autour d'un axe horizontal (C) le cadre (19) avec le poussoir (26) et l'actionneur du poussoir (27) pour incliner l'ouverture (2a) du bac (2) vers le bas,
déplacer le poussoir (26) mobile de ladite deuxième position dans le bac (2) vers ladite première position hors du bac (2) pour transférer (93) les objets plats (3) dans le casier navette (7).

12. Méthode pour décharger des bacs selon l'une des revendications 10 à 11, dans laquelle après déchargement (98) du casier navette (7) dans la zone de déchargement de casier (13b), le casier navette (7) vide est déplacé jusqu'à une zone de déviation (15) où le casier navette (7) vide est dévié vers un deuxième convoyeur (16) parallèle au premier convoyeur (12).

## Claims

1. A device for unloading an open-top tray (2) filled with flat articles (3) placed in a stack on the bottom of the tray, the device comprising:
a pivot member (18) suitable for taking hold of the tray (2) and for tilting its opening (2a) downwards,
a moving pusher (26) suitable for holding the flat articles (3) at the bottom of the tray (2) when the tray (2) is tilted by the pivot member (18),
a shuttle box (7) suitable for being moved by a conveyor (12) in both directions (A, B) along a conveying axis between the pivot member (18) and a box unloading zone (13b) remote from the pivot member (18),
the shuttle box (7) having a bottom (7b) with opposite back and front side walls (7d, 7c) along the conveying axis, which walls are removable relative to the bottom (7b),
a box tilting device (31) suitable for tilting the shuttle box (7) into a tilted position immediately below the tray (2), and an opening device (32) suitable for retracting the back wall (7d) of the tilted shuttle box (7) and then for repositioning the back wall (7d) of the box (7) on the box (7);
a moving paddle (14) mounted on an articulated arm (35), which paddle is firstly suitable for being moved vertically by pivoting of the articulated arm (35) from a low position at the same level as the bottom (7b) of the box (7) to a high position above the box (7), and secondly suitable for being moved horizontally by sliding along a rail (36), the paddle (14) being designed in such a manner as to retract the front wall (7c) of the box (7) and as to be inserted between the back wall (7d) of the box (7) and the stack of flat articles (3).

2. A device according to claim 1, wherein the bottom (7b) and the back and front walls (7d, 7c) of the box (7) are provided with grooves, and wherein the paddle (14) is in the form of a comb having teeth (14a) adapted to be inserted into the grooves (7h, 7i, 7j) of the box (7).

3. A device according to claim 1 or 2, wherein the opposite left and right side walls (7f, 7e) of the shuttle box (7) are equipped with a plurality of opposite notches (7g) designed to receive the back wall (7d) of the shuttle box (7) so as to close the shuttle box (7) in a plurality of different operational closure positions so as to adapt it to accommodate mailpiece stacks of different thicknesses.

4. A device according to any one of claims 2 or 3, wherein the pusher (26) is in the form of an L-shaped comb having teeth (33) adapted to be inserted into the grooves (7j) of the front wall (7c) of the shuttle box (7).

5. A device according to any one of claims 1 to 4, **characterized in that** it further comprises a crossing sensor (37) for detecting the passing of a shuttle box (7) between the pivot member (18) and the box unloading zone (13b), which sensor is suitable for holding the shuttle box (7) in a stationary position in response to said crossing sensor (37) detecting it going past; and
a control button (38) that, in response to being actuated, causes the conveyor (12) to operate so as to move the shuttle box (7) from said position to the box unloading zone (13b) and from the box unloading zone (13b) to the pivot member (18).

6. A device according to any one of claims 1 to 5, **characterized in that** it further comprises a presence sensor (39) for sensing the presence of a box (7) in the box unloading zone (13b), which sensor is suitable for stopping the conveyor (12) if a shuttle box (7) is present in the box unloading zone (13b).

7. A device according to any one of claims 1 to 6, **characterized in that** the pivot member (18) comprises a frame (19) suitable for holding the tray (2) firmly, a pusher actuator (27) suitable for moving the pusher (26) from a first position outside the tray to a second position inside the tray, in which second position the pusher (26) retains the flat articles (3) at the bottom of the tray (2), and a frame actuator (20) suitable for causing the frame (19) to pivot with the pusher (26) and with the pusher actuator (27) about a horizontal axis (C) so as to tilt the opening (2a) of the tray (2) downwards.

8. A device according to any one of claims 1 to 7, wherein a second conveyor (16) is provided in parallel with the first conveyor (12) and a box diverter (15) is provided for diverting the boxes (7) from the first conveyor (12) to the second conveyor (16).

9. A mailpiece handling system (1) comprising a postal sorting machine having a feed magazine (4) and sorting outlets equipped with removable trays (2) for storing the mailpieces (3) in them, a tray transfer system (5) that is arranged to bring full trays (2) from the sorting outlets of the machine to the feed magazine (4) of the machine and to bring empty trays (2) to the sorting outlets of the machine, and further comprising a tray unloading device (6) according to any one of claims 1 to 8, interposed between the tray transfer system (5) and the magazine of the machine (4).

10. A method of unloading open-top trays (2) filled with flat articles (3) placed in a stack on the bottom of the tray (2), the method using a pivot member (18) suitable for taking hold of the tray (2) and for tilting its opening downwards, said method comprising the steps consisting in:
• automatically moving an empty shuttle box (7) by means of a conveyor (12) between the pivot member (18) and a box unloading zone (13b) remote from the pivot member (18), the shuttle box (7) having a bottom (7b) with opposite back and front side walls (7d, 7c) that are removable relative to the bottom (7b), so as to bring the empty shuttle box (7), in a first stage, automatically to a tilted position immediately below the tray (2), also in a tilted position, by subjecting the box to an upward movement during which the back wall (7d) of the box (7) is retracted so as to enable the flat articles (3) to be transferred by sliding through the opening (2a) in the tray (2) into the box (7);
• automatically moving the full shuttle box (7) for automatically bringing the shuttle box (7), in a second stage, towards the unloading zone (13b) in a downward movement during which the back wall (7c) of the box (7) is repositioned in an operational box closure position on the box (7);
• automatically moving (97) the full shuttle box (7) in an essentially horizontal movement in translation (A) to a waiting zone (40) where the box (7) going past is detected by a crossing sensor (37), the conveyor (12) being stopped so as to hold the shuttle box (7) in a stationary position in the waiting zone (40) in response to the box (7) going past being detected by said crossing sensor (37), and the conveyor (12) being started again in response to a control button (38) of the conveyor being actuated so as to move the shuttle box (7) to the unloading zone (13b);
• moving a moving paddle (14) mounted on an articulated arm (35) downwards by pivoting of the arm (35) so as to retract the front wall (7c) of the box (7);
• moving the paddle (14) horizontally by sliding it along a rail (36) so as to place the paddle (14) substantially vertically above the back wall (7d) of the box (7);
• moving the paddle (14) downwards by pivoting of the articulated arm (35) so as to insert it between the back wall (7d) of the box (7) and the stack of flat articles (3);
• moving the paddle (14) horizontally by sliding it along the rail (36) so as to push (98) said stack of articles (3) out of the box (7);
• moving the paddle (14) downwards so as to reposition the front wall (7c) of the box in an operational box closure position on the empty shuttle box (7); and
• automatically moving (101) the empty shuttle box (7) in an essentially horizontal movement in translation in the opposite direction (B) in response to the control button (38) of the conveyor being actuated so as to move the shuttle box (7) towards the pivot member (18).

11. A method of unloading trays according to claim 10, comprising the steps consisting, prior to transferring the flat articles (3) by sliding them through the opening (2a) of the tray (2) into the shuttle box (7), in:
• bringing (92) the tray (2) into a frame (19) suitable for holding the tray (2) firmly;
• moving a moving pusher (26) from a first position outside the tray (2) to a second position inside the tray (2) in which the pusher (26) retains the flat articles (3) at the bottom of the tray (2);
• causing the frame (19) to pivot with the pusher (26) and with the pusher actuator (27) about a horizontal axis (C) so as to tilt the opening (2a) in the tray (2) downwards; and
• moving the moving pusher (26) from said second position inside the tray (2) to said first position outside the tray (2) so as to transfer (93) the flat articles (3) into the shuttle box (7).

12. A method of unloading trays according to claim 10 or claim 11, wherein, after unloading (98) of the shuttle box (7) in the box unloading zone (13b), the empty shuttle box (7) is moved to a diversion zone (15) in which the empty shuttle box (7) is diverted towards a second conveyor (16) parallel to the first conveyor (12).

## Patentansprüche

1. Vorrichtung zum Entladen eines Behältnisses (2), das oben offen ist und mit auf dem Grund des Behältnisses als Stapel angeordneten flachen Gegenständen (3) gefüllt ist, umfassend:
ein schwenkendes Organ (18), das geeignet ist, das Behältnis (2) zu erfassen und dessen Öffnung (2a) nach unten zu neigen,
einen beweglichen Schieber (26), der geeignet ist, die flachen Gegenstände (3) auf dem Grund des Behältnisses (2) zu halten, wenn das Behältnis (2) durch das schwenkbare Organ (18) geneigt wird,
ein Pendelfach (7), das geeignet ist, durch einen Förderer (12) in beide Richtungen (A, B) einer Förderrichtung zwischen dem schwenkenden Organ (18) und einer Fachentladungszone (13b), die von dem schwenkenden Organ (18) beabstandet ist, verlagert zu werden,
wobei das Pendelfach (7) einen Grund (7b) mit in Förderrichtung gegenüberliegenden hinteren (7d) und vorderen (7c) seitlichen Wandungen, die in Bezug auf den Grund (7b) abnehmbar sind, aufweist,
eine Fachneigevorrichtung (31), die geeignet ist, das Pendelfach (7) in eine geneigte Position lotrecht zum Behältnis (2) zu neigen, und eine Öffnungsvorrichtung (32), die geeignet ist, die hintere Wandung (7d) des geneigten Pendelfachs (7) zu eskamotieren und anschließend die hintere Wandung (7d) des Fachs (7) auf dem Fach (7) erneut zu positionieren,
eine bewegliche Palette (14), die an einem gelenkigen Hebel (35) montiert und in der Lage ist, vertikal verlagert zu werden durch Verschwenken des gelenkigen Hebels (35) von einer niedrigen Position auf dem Niveau des Grundes (7b) des Fachs (7) zu einer hohen Position oberhalb des Fachs (7), und die geeignet ist, horizontal durch Gleiten entlang einer Schiene (36) verlagert zu werden, wobei die Palette (14) derart ausgestaltet ist, dass sie die vordere Wandung (7c) des Fachs (7) eskamotiert und zwischen der hinteren Wandung (7d) des Fachs (7) und dem Stapel flacher Gegenstände (3) eindringt.

2. Vorrichtung nach Anspruch 1, bei dem der Grund (7b) und die hinteren (7d) und vorderen (7c) Wandungen des Fachs (7) mit Nuten versehen sind, und bei dem die Palette (14) in Gestalt eines Kamms mit Zinken (14a) ausgebildet ist, die geeignet sind, in die Nuten (7h, 7i, 7j) des Fachs (7) einzudringen.

3. Vorrichtung nach einem der Ansprüche 1 oder 2, bei dem die gegenüberliegenden linken (7f) und rechten (7e) seitlichen Wandungen des Pendelfachs (7) mit mehreren gegenüberliegenden Rasten (7g) ausgestattet sind, die dazu bestimmt sind, die hintere Wandung (7d) des Pendelfachs (7) zum Verschließen des Fachs (7) in mehreren verschiedenen operativen Schließpositionen des Pendelfachs (7) aufzunehmen, um es an verschiedene Dicken des Sendungsstapels anzupassen.

4. Vorrichtung nach einem der Ansprüche 2 oder 3, bei dem der Schieber (26) als L-förmig abgewinkelter Kamm vorgesehen ist, mit Zinken (33), die ausgebildet sind, um in Nuten (7j) der vorderen Wandung (7c) des Pendelfachs (7) einzudringen.

5. Vorrichtung nach einem der Ansprüche 1 bis 4, **dadurch gekennzeichnet, dass** sie ferner einen Durchgangssensor (37) für das Erfassen des Durchgangs des Pendelfachs (7) zwischen dem schwenkenden Organ (18) und der Fachentladezone (13b) umfasst, der in der Lage ist, das Pendelfach (7) in einer Position stillzusetzen in Reaktion auf das Erfassen seines Durchgangs durch den Durchgangssensor (37), und einen Steuerknopf (38), der in Reaktion auf seine Betätigung den Förderer (12) steuert zur Verlagerung des Pendelfachs (7) aus der besagten Position zu der Fachentladezone (13b) und von der Fachentladezone (13b) zu dem schwenkenden Organ (18).

6. Vorrichtung nach einem der Ansprüche 1 bis 5, **dadurch gekennzeichnet, dass** sie ferner einen Gegenwartsensor (39) für das Fach (7) in der Fachentladezone (13b) umfasst, der geeignet ist, den Förderer (12) anzuhalten, wenn ein Pendelfach (7) in der Fachentladezone (13b) anwesend ist.

7. Vorrichtung nach einem der Ansprüche 1 bis 6, **dadurch gekennzeichnet, dass** das schwenkende Organ (18) einen Rahmen (19), der in der Lage ist, das Behältnis (2) festzuhalten, ein Schieberbetätigungsglied (27), das in der Lage ist, den Schieber (26) von einer ersten Position außerhalb des Behältnisses zu einer zweiten Position in dem Behältnis, in der der Schieber (26) die flachen Gegenstände (3) auf dem Grund des Behältnisses (2) zurückhält, zu verlagern, und ein Rahmenbetätigungsglied (20), das in der Lage ist, den Rahmen (19) mit dem Schieber (26) und dem Schieberbetätigungsglied (27) um eine horizontale Achse (C) zu verschwenken zum Neigen der Öffnung (2a) des Behältnisses (2) nach unten, umfasst.

8. Vorrichtung nach einem der Ansprüche 1 bis 7, bei dem ein zweiter Förderer (16) parallel zu dem ersten Förderer (12) und ein Fachumleiter (15) zum Umleiten der Fächer (7) von dem ersten Förderer (12) zu dem zweiten Förderer (16) vorgesehen ist.

9. System zur Behandlung postalischer Sendungen (1), umfassend eine Postsortiermaschine mit einem Versorgungsmagazin (4) und Sortierausgängen mit abnehmbaren Behältnissen (2), um darin postalische Sendungen (3) zu lagern, ein Transfersystem (5) für Behältnisse, das ausgebildet ist, um volle Behältnisse (2) von den Sortierausgängen der Maschine zu dem Versorgungsmagazin (4) der Maschine und um leere Behältnisse (2) zu den Sortierausgängen der Maschine mitzunehmen, und umfassend ferner eine Behältnisentladevorrichtung (6) nach einem der Ansprüche 1 bis 8, die zwischen dem Transfersystem (5) für Behältnisse und dem Magazin (4) der Maschine zwischengeordnet ist.

10. Verfahren zum Entladen von Behältnissen (2), die oben offen sind und mit auf dem Grund des Behältnisses (2) als Stapel angeordneten flachen Gegenständen (3) gefüllt sind, mit einem schwenkenden Organ (18), das geeignet ist, das Behältnis (2) zu greifen und seine Öffnung nach unten zu neigen, umfassend die Schritte bestehend aus:
Automatisches Verlagern eines leeren Pendelfachs (7) durch einen Förderer (12) zwischen dem schwenkenden Organ (18) und einer Entladezone (13b), die von dem schwenkenden Organ (18) beabstandet ist, wobei das Pendelfach (7) einen Grund (7b) mit gegenüberliegeneden hinteren (7d) und vorderen (7c) seitlichen Wandungen aufweist, die von dem Grund (7b) abnehmbar sind, um automatisch in einem ersten Schritt das leere Pendelfach (7) in eine geneigte Position lotrecht zu dem gemäß einer Verlagerung von unten nach oben ebenfalls geneigten Behältnis (2) zu bringen, während die hintere (7d) Wandung des Fachs (7) eskamotiert wird, um einen Transfer der flachen Gegenstände (3) durch Gleiten durch die Öffnung (2a) des Behältnisses (2) in das Fach (7) zu bewerkstelligen,
Automatisches Verlagern des vollen Pendelfachs (7) zum automatischen Verbringen in einem zweiten Schritt des Pendelfachs (7) zu der Entladezone (13b) gemäß einer Verlagerung von oben nach unten, während dessen die hintere Wandung (7c) des Fachs (7) wieder in eine operative Schließposition des Fachs (7) platziert wird,
Automatisches Verlagern (97) des vollen Pendelfachs (7) gemäß einer im Wesentlichen horizontalen translatorischen Bewegung (A) bis zu einer Wartezone (40), in der der Durchgang des Fachs (7) durch einen Durchgangssensor (37) detektiert wird, wobei der Förderer (12) angehalten wird, um das Pendelfach (7) in einer Position in der Wartezone (40) stillzusetzen in Reaktion auf die Erfassung des Durchgangs des Fachs (7) durch den Durchgangssensor (37), und bei dem der Förderer (12) in Gang gesetzt wird in Reaktion auf die Betätigung eines Steuerknopfes (38) des Förderers zum Verlagern des Pendelfachs (7) bis zu der Entladezone (13b),
Verlagern einer beweglichen Palette (14), die auf einem gelenkigen Hebel (35) montiert ist, durch Verschwenken von oben nach unten des Hebels (35) zum Eskamotieren der vorderen Wandung (7c) des Fachs (7),
Horizontales Verlagern der Palette (14) durch Gleiten entlang einer Schiene (36) zum Platzieren der Palette (14) im wesentlichen oberhalb der hinteren Wandung (7d) des Fachs (7),
Verlagern der Palette (14) von oben nach unten durch Verschwenken des gelenkigen Gebels (35) zum Eindringen zwischen der hinteren Wandung (7d) des Fachs (7) und dem Stapel flacher Gegenstände (3),
Horizontales Verlagern der Palette (14) durch Gleiten entlang der Schiene (36) zum Schieben (98) dieses Stapels flacher Gegenstände (3) außerhalb des Fachs (7),
Verlagern der Palette (14) von oben nach unten zum Ersetzen der vorderen Wandung (7c) des Fachs in einer operativen Schließposition des leeren Pendelfachs (7),
Automatisches Verlagern (101) des leeren Pendelfachs (7) gemäß einer im Wesentlichen als horizontale Translation vorgesehenen Verlagerung in eine entgegengesetzte Richtung (B) in Reaktion auf die Betätigung eines Steuerknopfs (38) des Förderers zum Verlagern des Pendelfachs (7) zu dem schwenkenden Organ (18).

11. Verfahren zum Entladen von Behältnissen nach Anspruch 10, umfassend die Schritte bestehend aus, vor einem Transfer der flachen Gegenstände (3) durch Gleiten durch die Öffnung (2a) des Behältnisses (2) in das Pendelfach (7),
Heranbringen (92) des Behältnisses (2) in einen Rahmen (19), der geeignet ist, das Behältnis (2) festzuhalten,
Verlagern eines beweglichen Schiebers (26) von einer ersten Position außerhalb des Behältnisses (2) zu einer zweiten Position in dem Behältnis (2), in welcher der Schieber (26) die flachen Gegenstände (3) auf dem Grund des Behältnisses (2) zurückhält,
Verschwenken um eine horizantale Achse (C) des Rahmens (19) mit dem Schieber (26) und dem Schieberbetätigungsglied (27) zum Neigen der Öffnung (2a) des Behältnisses (2) nach unten,
Verlagern des beweglichen Schiebers (26) von der zweiten Position in dem Behältnis (2) zu der ersten Position außerhalb des Behältnisses (2) zum Transferieren (93) der flachen Gegenstände (3) in das Pendelfach (7).

12. Verfahren zum Entladen von Behältnissen nach einem der Ansprüche 10 bis 11, bei dem nach dem Entladen (98) des Pendelfachs (7) in der Fachentladezone (13b) das leere Pendelfach (7) bis zu einer Umleitungszone (15) verlagert wird, in der das leere Pendelfach (7) zu einem zweiten Förderer (16), der parallel zu dem ersten Förderer (12) ist, umgeleitet wird.
